# EUROPÄISCHE PATENTSCHRIFT

(11) **EP 1 838 523 B1**
(45) Veröffentlichungstag und Bekanntmachung des Hinweises auf die Patenterteilung: **27.05.2009**
(21) Anmeldenummer: 06806232.2
(22) Anmeldetag: 12.10.2006
(51) Int. Cl.: B32B 5/26, D04H 13/00, D03D 17/00, A41D 31/02

(54) **MEHRSCHICHTIGES TEXTILES FLÄCHENGEBILDE**
MULTILAYER FABRIC
STRUCTURE TEXTILE PLANE MULTICOUCHE

(30) Priorität: 13.10.2005 DE 102005049099
(43) Veröffentlichungstag der Anmeldung: 03.10.2007
(73) Patentinhaber: Lindenfarb Textilveredelung Julius Probst GmbH & Co. KG, 73432 Aalen (DE)
(72) Erfinder: NICKEL, Axel, 73479 Ellwangen (DE); LÄPPLE, Markus, 89522 Heidenheim (DE)
(74) Vertreter: Manitz, Finsterwald & Partner GbR
(86) Internationale Anmeldenummer: PCT/EP2006/009876
(87) Internationale Veröffentlichungsnummer: WO 2007/042302

(56) Entgegenhaltungen:
- EP-A- 1 081 263
- EP-A1- 0 390 622
- EP-A2- 1 103 645
- WO-A-20/05012618
- JP-A- 1 250 456
- JP-A- 4 091 266
- JP-A- 5 192 284
- JP-A- 11 170 413
- JP-A- 2005 009 008
- US-A- 4 145 468
- US-A- 4 695 500
- US-A- 4 775 579
- US-A- 5 334 437
- US-A1- 2001 029 966
- US-A1- 2005 022 321
- US-B1- 6 314 627
- US-B1- 6 893 522

## Beschreibung

Die vorliegende Erfindung betrifft ein mehrschichtiges, aus einer Trägerschicht, einer auf einer Seite der Trägerschicht angeordneten ersten Deckschicht und optional einer auf der anderen Seite der Trägerschicht angeordneten zweiten Deckschicht bestehendes textiles Flächengebilde, ein Verfahren zur Herstellung eines solchen mehrschichtigen textilen Flächengebildes und dessen Verwendung.

Ein- und mehrschichtige Materialien aus Textilverbundstoffen, wie Vlies oder Filz, werden in einer Reihe von Anwendungen eingesetzt, beispielsweise als Filter, Dachunterspannbahnen oder als Bestandteil von Bekleidungen.

Üblicherweise erfolgt die Herstellung von Filzen und Vliesen aus Stapelfasern und/oder Endlosfilamenten mittels bekannten mechanischen oder aerodynamischen Verfahren. Um den Filzen bzw. Vliesen eine gewünschte Festigkeit und Dimensionsstabilität zu verleihen, werden diese abschließend, z. B. durch Vernadelung, mechanisch verfestigt. Allerdings weist die mechanische Verfestigung den Nachteil auf, dass durch den Verfestigungsvorgang das Volumen des Vlieses wesentlich vermindert wird, so dass ein so mechanisch verfestigtes Nadelvlies für viele Anwendungsmöglichkeiten nicht mehr brauchbar ist. Zudem sind dünne Vliese mechanisch überhaupt nicht zu vernadeln.

Es wurde daher bereits vorgeschlagen, den Fasern Bindemittel zuzufügen, um dadurch eine nachträgliche Verfestigung durch thermisches Verschmelzen zu erreichen. Ein Nachteil des Zusatzes an Bindemittel liegt jedoch darin, dass dadurch die Herstellkosten verteuert werden. Zudem verschlechtert der Zusatz an Bindemitteln die Recyclefähigkeit der Vliesmaterialien. Schließlich sind die Festigkeit der so hergestellten Vliesstoffe für eine Vielzahl von Anwendungen immer noch zu gering.

Alternativ zu entsprechenden Materialien aus Textilverbundstoffen sind textile Flächengebilde aus Maschenware oder Webware bekannt, welche aufgrund deren Vermaschung bzw. Verwebung höhere Festigkeiten als Textilverbundstoffe aufweisen. Durch eine geeignete Vermaschung lassen sich aber auch spezielle Eigenschaften, wie z. B. eine hohe Elastizität des Flächengebildes, erreichen. Aufgrund dessen finden textile Flächengebilde aus Maschenware oder Webware nicht nur in der Bekleidungsindustrie, sondern auch in vielen anderen industriellen Bereichen breite Anwendung. Allerdings sind diese textilen Flächengebildet etwa fünfmal teurer als herkömmliche Vliesstoffe und daher aus ökonomischen Gründen, obgleich hinsichtlich der anwendungstechnischen Eigenschaften den Vliesstoffen überlegen oder zumindest gleichwertig, nicht für alle Anwendungen einsetzbar. Ein weiterer Nachteil dieser Flächengebilde gegenüber den aus Textilverbundstoffen, wie Vlies, hergestellten, liegt darin, dass eine erhebliche Einschränkung hinsichtlich der Art des Aufbaus, beispielsweise der Zusammensetzung der Fasermischung und dergl., besteht.

Es ist auch schon vorgeschlagen worden, ein Trägergewebe einseitig oder beidseitig mit einem Vlies zu versehen und die einzelnen Schichten durch Thermobehandlung oder durch Wasservernadelung miteinander zu verbinden. Allerdings weisen die bekannten, vorgenannten Verbundstoffe teilweise erhebliche Nachteile auf. Eine Vielzahl dieser Verbundstoffe ist aus vier oder mehr verschiedenartig und teilweise sehr komplex zusammengesetzten Schichten aufgebaut, so dass diese Gebilde in der Herstellung sehr teuer oder mit vertretbarem Aufwand überhaupt nicht industriell herstellbar sind. Ein solches textiles Flächengebilde wird beispielsweise in der DE-PS 27 03 654 beschrieben.

Bei andern Verbundstoffen des vorgenannten Typs wiederum ist die Stabilität der Verbindung der einzelnen Schichten untereinander für viele Anwendungen nicht ausreichend, weil sich einzelne Schichten unter einer gewissen Krafteinwirkung von dem Laminat ablösen.

Aus der US 4,145,468 ist ein textiles Flächengebilde bekannt, welches aus einer Trägerschicht aus Web- oder Maschenware und auf beiden Seiten hierauf angeordneten Deckschichten, welche eine Vielzahl von Faserbündeln enthalten, besteht.

In der EP 1 103 645 A2 wird ein Verfahren und eine Vorrichtung zur farblichen Musterung einer Bahn mittels hydrodynamischer Behandlung offenbart, bei dem ein mit einer oder mehreren Farben versehenes, gegebenenfalls eingefärbtes oder bedrucktes Nonwoven auf ein zweites, gegebenenfalls eine andere Farbe aufweisendes Nonwoven oder auf ein Woven gelegt wird und beide Schichten mit Wasserstrahlen miteinander verbunden werden.

In der JP 2005-009,008 wird ein textiles Flächengebilde beschrieben, bei dem auf einer Webware mit einem Flächengewicht von maximal 250 g/m² ein Faserflor aus Stapelfasern mit einem Flächengewicht von 20 bis 150 g/m² angeordnet ist.

Aus den Druckschriften JP-11-170,413 und JP-05-192,284 sind textile Flächengebilde bekannt, welche eine Schicht aus Web- oder Maschenware und wenigstens eine weitere Schicht aufweisen, welche nicht aus Web- oder Maschenware besteht.

Aus der US 4,695,500 ist ein textiles Flächegebilde aus Web- oder Maschenware bekannt, bei dem die Fasern der Web- bzw. Maschenware mit Stapelfasern umschlungen sind, wobei jedoch ein Großteil der Fasern von den Stapelfasern unbeschichtet ist.

Aufgabe der vorliegenden Erfindung ist es daher, ein textiles Flächengebilde auf Basis von Maschenware bereitzustellen, welches einerseits die vorteilhaften Eigenschaften von Maschenware aufweist und andererseits mit weiteren vorteilhaften Eigenschaften von Vliesen versehen werden kann, welches einfach aufgebaut und hinsichtlich seiner Zusammensetzung sehr flexibel ist, welches leicht auf eine gewünschte Dimensionsstabilität eingestellt werden kann, sich durch eine feste Verbindung der einzelnen Schichten untereinander auszeichnet und insbesondere einfach und kostengünstig hergestellt werden kann.

Erfindungsgemäß wird diese Aufgabe gelöst durch ein mehrschichtiges textiles Flächengebilde bestehend aus einer Trägerschicht, einer auf einer Seite der Trägerschicht angeordneten ersten Deckschicht und optional einer auf der anderen Seite der Trägerschicht angeordneten zweiten Deckschicht, wobei die Trägerschicht zumindest im Wesentlichen aus Stoff besteht, die erste Deckschicht sowie, sofern vorhanden, die zweite Deckschicht zumindest im Wesentlichen aus einem Textilverbundstoff bestehen und die erste Deckschicht sowie, sofern vorhanden, die zweite Deckschicht mit der Trägerschicht durch Wasservernadelung verbunden sind, wobei der Textilverbundstoff der ersten Deckschicht sowie, sofern vorhanden, der zweiten Deckschicht aus Einzelfasern mit einer Feinheit von wenigstens 0,6 dtex besteht, wobei die Trägerschicht aus wenigstens einer Maschenware besteht, bei der das Verhältnis der offenen Maschenfläche zur Gesamtfläche der Maschenware zwischen 5 und 90 % beträgt, wobei die Trägerschicht eine Dehnung zwischen 15 und 80 % aufweist, und, wobei das textile Flächengebilde eine Dichte von weniger als 0,2 g/cm³ aufweist.

Indem die erste und, sofern vorhanden, zweite Deckschicht in dem erfindungsgemäßen textilen Flächengebilde aus einem Textilverbundstoff bestehen, lassen sich so, weil Textilverbundstoffe wesentlich kostengünstiger als Web- oder Maschenware sind, durch die partielle Substitution des Stoffanteils kostengünstig textile Flächengebilde erhalten. Zudem konnte im Rahmen der vorliegenden Erfindung herausgefunden werden, dass aufgrund der Verbindung der einzelnen Schichten des erfindungsgemäßen textilen Flächengebildes durch Wasservernadelung und durch den Einsatz von Einzelfasern mit einer Feinheit von wenigstens 0,6 dtex in der/den Deckschicht(en) zudem eine überraschend feste Verbindung der einzelnen Schichten untereinander erzielt wird, welche mit anderen Verbindungstechniken, wie beispielsweise Thermobehandlung, oder beispielsweise durch Wasservernadelung solcher Schichten, welche feinere Einzelfasern aufweisen, nicht erreicht werden kann. Dadurch werden stabile Mehrschichtmaterialien erhalten, welche einerseits hinsichtlich ihrer Zusammensetzung, beispielsweise der Art der eingesetzten Fasermischungen, die Flexibilität herkömmlicher Vliesstoffe aufweisen und andererseits herkömmlichen textilen Flächengebilden aus Maschen ware entsprechende Festigkeiten aufweisen. Zudem sind die erfindungsgemäßen, zwei- oder dreischichtigen textilen Flächengebilde wesentlich einfacher aufgebaut als die aus dem Stand der Technik bekannten Verbundstoffe aus Maschen- bzw. Webware und Textilverbundstoffen, so dass die erfindungsgemäßen textilen Flächengebilde einfach und kostengünstig herzustellen sind. Zudem erlaubt die Kombination der Trägerschicht mit der ersten und optional zweiten Deckschicht, die anwendungstechnischen Eigenschaften und die Funktionalität der bekannten Maschenwaren durch die Wahl der Textilverbundstoffe gezielt zu beeinflussen.

Ein weiterer besonderer Vorteil des erfindungsgemäßen textilen Flächengebildes besteht darin, dass durch den Einsatz geeigneter, elastischer Trägerschichten ein mehrschichtiges textiles Flächengebilde erhalten wird, welches einerseits eine Oberfläche aus Vliesstoff aufweist und andererseits, anders als herkömmliche Vliesstoffe, elastisch ist.

Unter Stoff im Sinne der vorliegenden Erfindung werden textile Flächengebilde verstanden, welche gewebt, gewirkt oder gestrickt sind. Mithin umfasst der Begriff Stoff sowohl Maschenware, also Wirk- und Strickware, als auch Webware. Hingegen bezeichnet der Begriff Textilverbundstoff im Sinne der vorliegenden Erfindung textile Flächengebilde, welche weder gewebt, gestrickt noch gewirkt sind. Beispiele für Textilverbundstoffe im Sinne der vorliegenden Erfindung sind Vliesstoffe oder Filze.

Ferner werden unter Gestrick textile Flächengebilde verstanden, bei denen die Maschen aus einem horizontal vorgelegten Faden einzeln und nacheinander gebildet werden, wohingegen als Gewirk textile Flächengebilde bezeichnet werden, die aus einem oder mehreren Fadensystemen durch gleichzeitiges Bilden von Maschen in Längsrichtung gebildet werden.

In dem Fall, dass das erfindungsgemäße textile Flächengebilde eine erste und eine zweite Deckschicht aufweist, welche an den beiden gegenüberliegenden Seiten der Trägerschicht angeordnet sind, können die erste und zweite Deckschicht hinsichtlich Zusammensetzung, Schichtdicke und dergleichen identisch oder verschieden sein.

Wie vorstehend dargelegt, führt die Kombination der erfindungsgemäß vorgesehenen Wasservernadelung der einzelnen Schichten mit den in der Deckschicht vorgesehenen, verglichen mit den üblicherweise in Deckschichten von Verbundstoffen eingesetzten, vergleichsweise groben Einzelfasern mit einer Feinheit von wenigstens 0,6 dtex zu einem überraschend festen Verbund der einzelnen Schichten untereinander.

Um eine besonders feste Verbindung der einzelnen Schichten untereinander zu erhalten, wird in Weiterbildung des Erfindungsgedankens vorgeschlagen, dass der Textilverbundstoff der ersten und, sofern vorgesehen, der zweiten Deckschicht aus Einzelfasern mit einer Feinheit zwischen 1 und 2 dtex und besonders bevorzugt aus Einzelfasern mit einer Feinheit zwischen 1,4 und 1,7 dtex besteht.

Insbesondere, weil die Trägerschicht elastisch eingestellt wird, werden besonders gute anwendungstechnische Eigenschaften der erfindungsgemäßen textilen Flächengebilde erreicht. Die aus dem Stand der Technik bekannten Vliesstoffe lassen sich, wenn überhaupt, nur durch bestimmte, spezielle und daher sehr teure elastische Ausgangsmaterialien elastisch einstellen. Bei den erfindungsgemäß in der Trägerschicht einzusetzenden Stoffen, also z. B. Maschenwaren, kann jedoch, ohne dass spezielle, teure Rohstoffe hierzu von Nöten sind, durch die Maschengebung der Trägerschicht die Elastizität des textilen Flächengebildes auf einen beliebigen Wert eingestellt werden. Da die Deckschicht(en) an die Garne der Trägerschicht mechanisch angebunden ist/ sind, wird die Gesamtelastizität des textilen Flächengebildes nur unwesentlich durch die Art der Deckschicht(en) beeinflusst, so dass die Elastizität der Trägerschicht gewissermaßen auf den Vliesstoff der Deckschicht übertragen wird. Mithin lassen sich die erfindungsgemäßen textilen Flächengebilde auch durch Einsatz von an sich unelastischen Vliesstoffen durch entsprechende Wahl der Maschengebung der Trägerschicht elastisch einstellen.

Aus diesem Grund ist es gemäß einer weiteren bevorzugten Ausführungsform der vorliegenden Erfindung vorgesehen, dass die Trägerschicht des textilen Flächengebildes eine Elastizität in Form der Dehnung, bei der das Material noch reversibel in die Ausgangsposition zurückkehrt, zwischen 30 und 70 % aufweist.

Die vorgenannten Elastizitäten lassen sich insbesondere dann einfach erreichen, wenn als Trägerschicht ein Gestrick eingesetzt wird.

In Weiterbildung des Erfindungsgedankens wird vorgeschlagen, dass das textile Flächengebilde eine Dichte zwischen 0,1 und 0,2 g/cm³ aufweist.

Grundsätzlich können als Fasermaterialien für die Trägerschicht aus Stoff alle dem Fachmann bekannten Materialien eingesetzt werden, wobei insbesondere mit Viskose, Baumwolle, Wolle, Polyester, Polyethylen, Polypropylen, Polyamid, Polyacryl, Glasfasern, Carbonfasern, Aramidfasern und beliebigen Kombinationen von zwei oder mehr der vorgenannten Verbindungen gute Ergebnisse erhalten werden. Erfindungsgemäß kann die Trägerschicht hydrophob oder hydrophil sein.

Insbesondere mit ein Flächengewicht von 30 bis 350 g/m² aufweisenden Trägerschichten werden gute Ergebnisse erhalten, wobei das Flächengewicht besonders bevorzugt 40 bis 120 g/m² und ganz besonders bevorzugt 50 bis 90 g/m² beträgt.

Im Rahmen der vorliegenden Erfindung hat es sich als vorteilhaft erwiesen, für die Trägerschicht ein Stoffmaterial einzusetzen, bei dem die Maschen-/Web-Kreuzungspunkte nicht zu dicht sind. Gemäß der vorliegenden Erfindung besteht die Trägerschicht aus einer Maschenware, d.h. einer Wirkware (Gewirk) oder einer Strickware (Gestrick), wobei das Verhältnis der offenen Maschenfläche zur Gesamtfläche der Maschenware zwischen 5 und 90 %, bevorzugt zwischen 15 und 80 % und besonders bevorzugt zwischen 25 und 75 % beträgt. Neben der erfindungsgemäß vorgesehenen Wasservernadelung der einzelnen Schichten und dem Einsatz von Einzelfasern mit einer Feinheit von wenigstens 0,6 dtex begünstigt der Einsatz einer Trägerschicht mit dem vorgenannten Verhältnis von offener Maschenfläche zu Gesamtfläche der Maschenware eine feste Verbindung der einzelnen Schichten untereinander, so dass damit eine sichere Befestigung der Deckschicht(en) mit der Trägerschicht gewährleistet wird. Abgesehen von den vorgenannten Einflussgrößen wird die Stärke der Verbindung der einzelnen Schichten untereinander auch noch in einem untergeordneten Ausmaß von der Filamentzahl, der Garnfeinheit, der Länge der Einzelfasern und der Teilung beeinflusst.

In Weiterbildung des Erfindungsgedankens wird vorgeschlagen, auf dem Trägermaterial eine erste Deckschicht und optional auf der gegenüberliegenden Seite der Trägerschicht eine zweite Deckschicht aus vorzugsweise unverfestigtem oder mechanisch vorverfestigtem Vliesstoff vorzusehen.

Grundsätzlich können für den Vliesstoff der ersten Deckschicht und, sofern vorgesehen, der zweiten Deckschicht alle dem Fachmann bekannten Faserarten eingesetzt werden, wobei vorzugsweise die erste Deckschicht und, sofern vorgesehen, die zweite Deckschicht, jeweils unabhängig voneinander, einen Vliesstoff enthalten, der wenigstens eine Verbindung enthält, die aus der aus Viskose, Baumwolle, Wolle, Polyester, Polyethylen, Polypropylen, Polyamid, Polyacryl, Glasfasern, Carbonfasern, Aramidfasern und beliebigen Kombinationen von zwei oder mehreren der vorgenannten Verbindungen bestehenden Gruppe ausgewählt ist. In Abhängigkeit von der angedachten Verwendung des textilen Flächengebildes kann die erste Deckschicht und, sofern vorgesehen, die zweite Deckschicht hydrophil oder hydrophob ausgebildet sein.

Insbesondere mit textilen Flächengebilden, bei denen der Vliesstoff der ersten und, sofern vorgesehen, der zweiten Deckschicht ein Flächengewicht von 5 bis 200 g/m², bevorzugt von 20 bis 150 g/m² und besonders bevorzugt von 30 bis 100 g/m² aufweist, werden gute Ergebnisse erhalten. Die entsprechenden Vliesstoffe können mit den herkömmlichen Verfahren, beispielsweise mechanisch durch Krempeln oder aerodynamisch, hergestellt werden. Da dem textilen Flächengebilde durch die Trägerschicht von Natur aus eine gewisse Festigkeit verliehen wird, kann insbesondere auch unverfestigter Vliesstoff eingesetzt werden, ohne dass die Festigkeit des Flächengebildes zu sehr reduziert wird.

Hinsichtlich der Länge der für die erste Deckschicht und, sofern vorgesehen, zweite Deckschicht einzusetzen Fasern ist die vorliegende Erfindung nicht limitiert. Allerdings wird eine umso bessere Verbindung zwischen der Trägerschicht und den Fasern der wenigstens einen Deckschicht erreicht, desto länger die Fasern sind. Aus diesem Grund werden für die ersten Deckschicht und, sofern vorgesehen, die zweite Deckschicht vorzugsweise Vliesstofffasern mit einer Länge von 8 bis 40 mm, besonders bevorzugt mit 10 bis 30 mm und ganz besonders bevorzugt 12 bis 25 mm eingesetzt.

Ein weiterer besonderer Vorteil der erfindungsgemäßen textilen Flächengebilde ist, dass sowohl in der Trägerschicht als auch in der wenigstens einen Deckschicht jeweils alle dem Fachmann bekannten Fasermaterialien eingesetzt werden können, so dass die anwendungstechnischen Eigenschaften des textilen Flächengebildes nahezu beliebig der gewünschten Verwendung angepasst werden können. Insbesondere ist es möglich, die Trägerschicht hydrophob und die wenigstens eine Deckschicht hydrophil auszubilden oder die Trägerschicht hydrophil und die wenigstens eine Deckschicht hydrophob auszubilden oder alle Schichten hydrophil oder hydrophob auszubilden. Durch den Einsatz geeigneter Mischungen aus verschiedenen Fasermaterialien können die Hydrophilie- und Hydrophobiewerte der einzelnen Schichten auf beliebige Werte eingestellt werden.

Gemäß einer weiteren bevorzugten Ausführungsform der vorliegenden Erfindung enthält die Trägerschicht sowie die erste Deckschicht und, sofern vorgesehen, die zweite Deckschicht jeweils Polyester, wobei der Anteil an Polyester in den einzelnen Schichten vorzugsweise 20 bis 100 Gew.-%, besonders bevorzugt 50 bis 100 Gew.-%, ganz besonders 75 bis 100 Gew.-% und höchst bevorzugt 90 bis 100 Gew.-% beträgt. Insbesondere mit textilen Flächengebilden, deren Trägerschicht, deren erste Deckschicht und, sofern vorgesehen, deren zweite Deckschicht zu jeweils 100 Gew.-% aus Polyester bestehen, werden besonders gute Ergebnisse erhalten. Die textilen Flächengebilde gemäß dieser Ausführungsform eignen sich insbesondere als Bestandteil von Bekleidung, insbesondere von Schuhen, als Geotextil oder medizinisches Textil. Dies liegt insbesondere daran, dass das textile Flächengebilde gemäß dieser Ausführungsform aufgrund des Einsatzes von Polyester thermisch besonders stabil ist. Zudem sorgen die Mikrofasern in dem Vlies der Deckschicht für einen guten Flüssigkeitstransport, so dass Flüssigkeit ohne gespeichert zu werden, weitergeleitet wird. Zudem sind diese Materialien hervorragend einheitlich färbbar.

Gemäß einer weiteren bevorzugten Ausführungsform der vorliegenden Erfindung enthält die Trägerschicht 20 bis 100 Gew.-% Polyester, und enthalten die erste Deckschicht und, sofern vorgesehen, die zweite Deckschicht 20 bis 100 Gew.-% Celluloseviskose. Insbesondere mit entsprechenden Flächengebilden, bei denen die Trägerschicht 50 bis 100 Gew.-%, besonders bevorzugt 75 bis 100 Gew.-% und ganz besonders bevorzugt 90 bis 100 Gew.-%, Polyester enthält und die erste Deckschicht sowie, sofern vorgesehen, die zweite Deckschicht 50 bis 100 Gew.-%, besonders bevorzugt 75 bis 100 Gew.-% und ganz besonders bevorzugt 90 bis 100 Gew.-% Celluloseviskose enthalten, werden besonders gute Ergebnisse erhalten. Höchst bevorzugt besteht das textile Flächengebilde gemäß dieser Ausführungsform aus einer Trägerschicht, welche zu 100 Gew.-% aus Polyester besteht, sowie einer ersten und ggf. zweiten Deckschicht, welche jeweils zu 100 Gew.-% aus Celluloseviskose bestehen. Aufgrund ihrer Wasserdurchlässigkeit sind die textilen Flächengebilde gemäß dieser Ausführungsform hervorragend als Filtermaterialien und Begrünungsmatten einsetzbar. Wird das textile Flächengebilde als Filtermaterial eingesetzt, so können durch die Feinheit des eingesetzten Vlieses und die Maschenweite des eingesetzten Trägermaterials, die Filtereigenschaften des Materials auf nahezu jeden gewünschten Wert eingestellt werden. Auch bei Einsatz der entsprechenden textilen Flächengebilde als Begrünungsmatten wirkt sich die Wasserdurchlässigkeit der eingesetzten Materialien vorteilhaft aus. Während bei Einsatz als Begrünungsmatte das Gewirk der Trägerschicht einerseits eine gute Haftung auf dem Boden ermöglicht und ein Hindurchwachsen des Grases oder anderer Pflanzen erlaubt, lässt die Wasserdurchlässigkeit der Deckschicht(en) eine Befeuchtung des Bodens bei Regen zu. Zudem zeichnen sich die entsprechenden Materialien aufgrund der Wasseraufnahmefähigkeit der Deckschicht(en) durch eine Speicherfunktion aus.

Gemäß einer weiteren bevorzugten Ausführungsform der vorliegenden Erfindung besteht das textile Flächengebilde aus einer Trägerschicht, welche zu 20 bis 100 Gew.-% aus Polyester besteht, sowie einer ersten und ggf. einer zweiten Deckschicht, welche jeweils zu 20 bis 100 Gew.-% aus Polypropylen bestehen. Insbesondere mit entsprechenden Flächengebilden, bei denen die Trägerschicht zu 50 bis 100 Gew.-%, besonders bevorzugt zu 75 bis 100 Gew.-% und ganz besonders bevorzugt zu 90 bis 100 Gew.-% aus Polyester besteht und die erste und ggf. zweite Deckschicht zu 50 bis 100 Gew.-%, besonders bevorzugt zu 75 bis 100 Gew.-% und ganz besonders bevorzugt zu 90 bis 100 Gew.-% aus Polypropylen bestehen, werden besonders gute Ergebnisse erhalten. Insbesondere textile Flächengebilde, welche eine Trägerschicht aus 100 Gew.-% Polyester und eine erste Deckschicht und optional eine zweite Deckschicht jeweils aus 100 Gew.-% Polypropylen aufweisen, haben sich als besonders vorteilhaft erwiesen. Während die aus Polyester bestehende Trägerschicht hydrophil und insbesondere auch wasserdampfdurchlässig ist, ist/sind die Deckschicht(en) aus Polypropylen hydrophob. Aus diesem Grund eignen sich die textilen Flächengebilde gemäß dieser Ausführungsform insbesondere für Dachunterspannbahnen sowie Einlagen für Bekleidung, Schuhe und dergleichen.

In Weiterbildung des Erfindungsgedankens wird vorgeschlagen, die Trägerschicht des textilen Flächengebildes mit der ersten Deckschicht und, sofern vorhanden, mit der zweiten Deckschicht mit einem Wasserdruck zwischen 20 und 500 bar wasserzuvernadeln. Hierdurch wird eine stabile und feste Verbindung der einzelnen Schichten des erfindungsgemäßen textilen Flächengebildes erhalten, ohne eine Schädigung oder eine zu starke Verdichtung wie bei einer mechanischen Vernadelung des textilen Flächengebildes zu bewirken. Insbesondere, wenn die Wasservernadelung bei einem Wasserdruck zwischen 50 und 400 bar und besonders bevorzugt zwischen 100 und 300 bar durchgeführt wird, werden besonders stabile textile Flächengebilde erhalten.

Zudem ist es bevorzugt, dass die Trägerschicht mit der ersten Deckschicht und der optionalen zweiten Deckschicht mit 0,1 bis 0,5 mm dicken Wasserstrahlen wasservernadelt ist. Bei Einsatz von Wasserstrahlen mit diesem Durchmesser werden gute Verwirbelungen des auf der Trägerschicht abgelagerten Vliesstoffes erreicht, so dass dessen Fasern sich fest mit dem Gewirk oder dem Gewebe der Trägerschicht verbinden.

Ferner hat es sich als vorteilhaft erwiesen, sofern die Trägerschicht beidseitig mit einer identisch zusammengesetzten Deckschicht verbunden werden soll, die Einzelfasern nur auf einer Seite der Trägerschicht aufzubringen und bei der Wasservernadelung die Wasserstrahlen zunächst durch das die erste Deckschicht bildende Material zu führen, bevor diese auf die Trägerschicht treffen. Durch entsprechende Einstellung der Wasservernadelungsbedingungen (Wasserdruck, Wasserstrahlendurchmesser und dergl.) lässt sich bei dieser Ausführungsform erreichen, dass die einzelnen Fasern des lediglich auf einer Seite der Trägerschicht angeordneten Vliesstoffs derart verwirbelt werden, dass sich diese Fasern nicht nur in den Maschen des Trägerstoffs verfangen, sondern auch über die Unterseite des Trägerstoffs hinausreichen. So kann auf einfache Art und Weise eine beidseitig mit Vliesstoff bedeckte Trägerschicht erhalten werden, obgleich die Fasern nur auf einer Seite der Trägerschicht abgelegt werden.

Gemäß einer weiteren bevorzugten Ausführungsform wird das textile Flächengebilde beidseitig wasservernadelt, also zunächst von einer Seite wasservernadelt, bevor das Gebilde von der gegenüberliegenden Seite erneut wasservernadelt wird.

In Weiterbildung des Erfindungsgedankens wird vorgeschlagen, das textile Flächengebilde nach der Wasservernadelung für bestimmte Anwendungsfälle durch mechanische Vernadlung weiter zu verfestigen. Hierdurch wird eine Verdichtung des textilen Flächengebildes erreicht, wodurch ein Herauslösen von einzelnen Fasern aus dem Flächengebilde zuverlässig verhindert wird. Zudem wird hierdurch die Porengröße des Materials reduziert.

Ein weiterer Gegenstand der vorliegenden Erfindung ist ein Verfahren zur Herstellung eines textilen Flächengebildes, welches zur Herstellung des erfindungsgemäßen textilen Flächengebildes geeignet ist.

Erfindungsgemäß werden bei diesem Verfahren Faserballen als Faserflor vorgelegt, wobei der Faserflor direkt, d.h. ohne vorherige mechanische Verfestigung, auf die Trägerschicht aufgelegt wird, bevor diese Anordnung mit Wasserstrahlen vernadelt wird. Bei dieser Ausführungsform wird mithin das Vlies durch die Wasservernadelung aus dem Flor erzeugt.

Alternativ dazu ist es möglich, zunächst einen Vliesstoff herzustellen, beispielsweise durch mechanische Verfestigung von Faserflor, bevor der vorverfestigte Vliesstoff auf die Trägerschicht aufgelegt wird und mit dieser durch Wasservernadelung verbunden wird. Bei dieser Verfahrensführung erfolgt demnach zunächst eine Herstellung eines Vliesstoffes und erst anschließend die Verbindung der Deckschicht(en) mit der Trägerschicht.

Unabhängig davon, welche der beiden vorgenannten Verfahrensvarianten eingesetzt wird, werden besonders gute Ergebnisse erhalten, wenn der Wasserdruck bei der Vernadelung zwischen 20 und 500 bar, bevorzugt zwischen 50 und 400 bar und besonders bevorzugt zwischen 100 und 300 bar liegt.

In Weiterbildung des Erfindungsgedankens wird vorgeschlagen, die Wasservernadelung mit 0,1 bis 0,5 mm dicken Wasserstrahlen vorzunehmen.

Insbesondere wenn bei der Wasservernadelung die Wasserstrahlen von der Deckschicht in Richtung der Trägerschicht geführt werden, werden gute Ergebnisse erhalten.

Aufgrund ihrer anwendungstechnischen Eigenschaften eignen sich die erfindungsgemäßen textilen Flächengebilde sowohl zur Verwendung als Funktionstextil im Bekleidungsbereich, als Filtermaterial, als Begrünungsrnatte, als Dachunterspannbahn sowie als Einlage für Bekleidung und insbesondere als Einlage für Schuhe.

Im Folgenden wird die Erfindung anhand eines den Erfindungsgedanken darlegenden, diesen jedoch nicht einschränkenden Beispiels erläutert.

### Beispiel 1

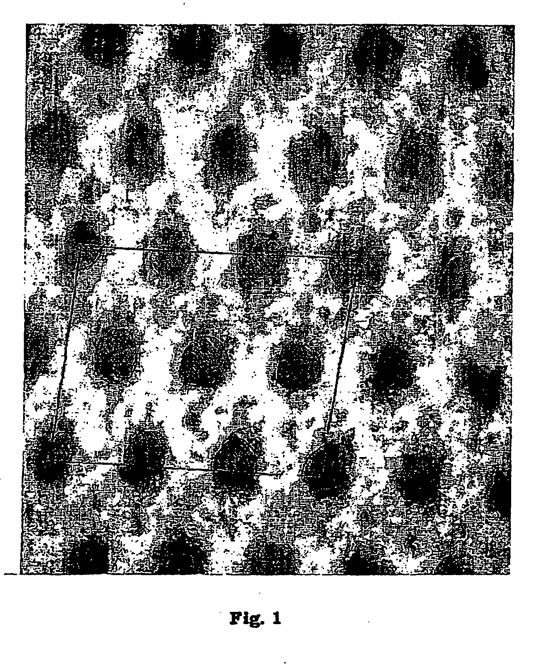

Auf ein Gewirk aus 100 Gew.-% elastischen Polyesterfasern mit einem Flächengewicht von 40 g/m² und einem Verhältnis Maschenfläche zu Gesamtfläche von 18 % wurde ein aus 100 Gew.-% Polypropylenfasern bestehender (unverfestigter) Faserflor abgelegt (Fig. 1), wobei die Feinheit der Einzelfasern des Faserflors 1,7 dtex betrug.

Nachfolgend wurde der Zweischichtaufbau wasservernadelt, wobei Wasserstrahlen in einem seitlichen Abstand von 5 mm bei einem Wasserdruck von 120-300 bar, in mehreren Schritten hintereinander, zunächst durch die Faserflorschicht und dann durch die Trägerschicht geführt wurden. Dabei betrug der Durchmesser der einzelnen Wasserstrahlen etwa 0,3 mm.

Durch die eingestellten Bedingungen bei der Wasservernadelung wurde ein textiles Flächengebilde aus einem beidseitig mit Polypropylenvlies beschichteten Gewirk aus Polyesterfasern erhalten, also ein textiles Flächengebilde mit einer ersten Deckschicht und einer auf der gegenüberliegenden Seite der Trägerschicht angeordneten zweiten Deckschicht. Obgleich die eingesetzten Florfasern aus Polypropylen unelastisch waren, ergab sich ein elastisches textiles Flächengebilde.

Das so hergestellte textile Flächengebilde eignet sich insbesondere als Unterdachspannbahn, Filter, Einlage für Schuhe, Bekleidung und dergleichen.

## Patentansprüche

1. Mehrschichtiges textiles Flächengebilde bestehend aus einer Trägerschicht, einer auf einer Seite der Trägerschicht angeordneten ersten Deckschicht und optional einer auf der anderen Seite der Trägerschicht angeordneten zweiten Deckschicht, wobei die Trägerschicht zumindest im Wesentlichen aus Stoff besteht, die erste Deckschicht sowie, sofern vorhanden, die zweite Deckschicht zumindest im Wesentlichen aus einem Textilverbundstoff bestehen und die erste Deckschicht sowie, sofern vorhanden, die zweite Deckschicht mit der Trägerschicht durch Wasservernadelung verbunden sind, **dadurch gekennzeichnet, dass** der Textilverbundstoff der ersten Deckschicht sowie, sofern vorhanden, der zweiten Deckschicht aus Einzelfasern mit einer Feinheit von wenigstens 0,6 dtex besteht, dass die Trägerschicht aus wenigstens einer Maschenware besteht, wobei das Verhältnis der offenen Maschenfläche zur Gesamtfläche der Maschenware zwischen 5 und 90 % beträgt, dass die Trägerschicht eine Dehnung zwischen 15 und 80 % aufweist, und, dass das textile Flächengebilde eine Dichte von weniger als 0,2 g/cm³ aufweist.

2. Textiles Flächengebilde nach Anspruch 1, **dadurch gekennzeichnet, dass** der Textilverbundstoff aus Einzelfasern mit einer Feinheit zwischen 1 und 2 dtex und besonders bevorzugt zwischen 1,4 und 1,7 dtex besteht.

3. Textiles Flächengebilde nach Anspruch 1 oder 2, **dadurch gekennzeichnet, dass** die Trägerschicht eine Dehnung zwischen 30 und 70 % aufweist.

4. Textiles Flächengebilde nach einem der vorhergehenden Ansprüche, **dadurch gekennzeichnet, dass** dieses eine Dichte zwischen 0,1 und weniger als 0,2 g/cm³ aufweist.

5. Textiles Flächengebilde nach einem der vorhergehenden Ansprüche, **dadurch gekennzeichnet, dass** die Trägerschicht ein Gestrick ist.

6. Textiles Flächengebilde einem der vorhergehenden Ansprüche, **dadurch gekennzeichnet, dass** die Trägerschicht wenigstens eine aus der aus Viskose, Baumwolle, Wolle, Polyester, Polyethylen, Polypropylen, Polyamid, Polyacryl, Glasfasern, Carbonfasern, Aramidfasern und beliebigen Kombinationen hiervon bestehenden Gruppe ausgewählte Verbindung enthält.

7. Textiles Flächengebilde nach einem der vorhergehenden Ansprüche, **dadurch gekennzeichnet, dass** die Trägerschicht ein Flächengewicht von 30 bis 350 g/m², bevorzugt 40 bis 120 g/m² und besonders bevorzugt 50 bis 90 g/m² aufweist.

8. Textiles Flächengebilde nach einem der vorhergehenden Ansprüche, **dadurch gekennzeichnet, dass** die Trägerschicht aus wenigstens einer Maschenware besteht, wobei das Verhältnis der offenen Maschenfläche zur Gesamtfläche der Maschenware zwischen zwischen 15 und 80 % und bevorzugt zwischen 25 und 75 % beträgt.

9. Textiles Flächengebilde nach einem der vorhergehenden Ansprüche, **dadurch gekennzeichnet, dass** die erste und, sofern vorhanden, die zweite Deckschicht aus unverfestigtem oder mechanisch verfestigtem Vliesstoff besteht.

10. Textiles Flächengebilde nach Anspruch 9, **dadurch gekennzeichnet, dass** der Vliesstoff wenigstens eine aus der aus Viskose, Baumwolle, Wolle, Polyester, Polyethylen, Polypropylen, Polyamid, Polyacryl, Glasfasern, Carbonfasern, Aramidfasern und beliebigen Kombinationen hiervon bestehenden Gruppe ausgewählte Verbindung enthält.

11. Textiles Flächengebilde nach Anspruch 9 oder 10, **dadurch gekennzeichnet, dass** der Vliesstoff ein Flächengewicht von 5 bis 200 g/m², bevorzugt 20 bis 150 g/m² und besonders bevorzugt 30 bis 100 g/m² aufweist.

12. Textiles Flächengebilde nach einem der Ansprüche 9 bis 11, **dadurch gekennzeichnet, dass** die Länge der den Vliesstoff bildenden Fasern 8 bis 40 mm, bevorzugt 10 bis 30 mm und besonders bevorzugt 12 bis 25 mm beträgt.

13. Textiles Flächengebilde nach einem der vorhergehenden Ansprüche, **dadurch gekennzeichnet, dass** die Trägerschicht und die erste Deckschicht und, sofern vorhanden, die zweite Deckschicht jeweils zu 20 bis 100 Gew.-%, bevorzugt zu 50 bis 100 Gew.-%, besonders bevorzugt zu 75 bis 100 Gew.-% und ganz besonders bevorzugt zu 90 bis 100 Gew.-% aus Polyester bestehen.

14. Textiles Flächengebilde nach einem der Ansprüche 1 bis 12, **dadurch gekennzeichnet, dass** die Trägerschicht zu 20 bis 100 Gew.-%, bevorzugt zu 50 bis 100 Gew.-%, besonders bevorzugt zu 75 bis 100 Gew.-% und ganz besonders bevorzugt zu 90 bis 100 Gew.-% aus Polyester besteht und die erste Deckschicht und, sofern vorhanden, die zweite Deckschicht zu 20 bis 100 Gew.%, bevorzugt zu 50 bis 100 Gew.-%, besonders bevorzugt zu 75 bis 100 Gew.-% und ganz besonders bevorzugt zu 90 bis 100 Gew.-% aus Celluloseviskose bestehen.

15. Textiles Flächengebilde nach einem der Ansprüche 1 bis 12, **dadurch gekennzeichnet, dass** die Trägerschicht zu 20 bis 100 Gew.-%, bevorzugt zu 50 bis 100 Gew.-%, besonders bevorzugt zu 75 bis 100 Gew.-% und ganz besonders bevorzugt zu 90 bis 100 Gew.-% aus Polyester besteht und die erste Deckschicht und, sofern vorhanden, die zweite Deckschicht zu 20 bis 100 Gew.-%, bevorzugt zu 50 bis 100 Gew.-%, besonders bevorzugt zu 75 bis 100 Gew.-% und ganz besonders bevorzugt zu 90 bis 100 Gew.-% aus Polypropylen bestehen.

16. Textiles Flächengebilde nach einem der vorhergehenden Ansprüche, **dadurch gekennzeichnet, dass** die Trägerschicht mit der ersten Deckschicht und, sofern vorhanden, der zweiten Deckschicht mit einem Wasserdruck zwischen 20 und 500 bar, bevorzugt zwischen 50 und 400 bar und besonders bevorzugt zwischen 100 und 300 bar wasservernadelt ist.

17. Textiles Flächengebilde nach einem der vorhergehenden Ansprüche, **dadurch gekennzeichnet, dass** die Trägerschicht mit der ersten Deckschicht und, sofern vorhanden, der zweiten Deckschicht mit 0,1 bis 0,5 mm dicken Wasserstrahlen wasservernadelt ist.

18. Textiles Flächengebilde nach einem der vorhergehenden Ansprüche, **dadurch gekennzeichnet, dass** die Trägerschicht mit der ersten Deckschicht und, sofern vorhanden, der zweiten Deckschicht beidseitig wasservernadelt ist.

19. Textiles Flächengebilde nach einem der vorhergehenden Ansprüche, **dadurch gekennzeichnet, dass** dieses nach der Wasservernadelung mechanisch vernadelt wurde.

20. Verfahren zur Herstellung eines textilen Flächengebildes nach einem der Ansprüche 1 bis 19, bei dem Faserflor auf wenigstens eine Seite einer zumindest im Wesentlichen aus Stoff bestehenden Trägerschicht abgelegt wird und der Faserflor mit der Trägerschicht durch Wasservernadelung verbunden wird.

21. Verfahren zur Herstellung eines textilen Flächengebildes nach einem der Ansprüche 1 bis 19, bei dem ein mechanisch vorgefestigtes Vlies auf wenigstens eine Seite einer zumindest im Wesentlichen aus Stoff bestehenden Trägerschicht abgelegt wird und das vorgefestigte Vlies mit der Trägerschicht durch Wasservernadelung verbunden wird.

22. Verfahren nach Anspruch 20 oder 21, **dadurch gekennzeichnet, dass** die Wasservernadelung mit einem Wasserdruck zwischen 20 und 500 bar, bevorzugt zwischen 50 und 400 bar und besonders bevorzugt zwischen 100 und 300 bar erfolgt.

23. Verfahren nach einem der Ansprüche 20 bis 22, **dadurch gekennzeichnet, dass** die Wasservernadlung mit 0,1 bis 0,5 mm dicken Wasserstrahlen erfolgt.

24. Verfahren nach einem der Ansprüche 20 bis 23, **dadurch gekennzeichnet, dass** bei der Wasservernadelung die Wasserstrahlen von der Deckschicht in Richtung der Trägerschicht geführt werden.

25. Verwendung eines textilen Flächengebildes nach einem der Ansprüche 1 bis 19 als Bestandteil von Filtern, Begrünungsmatten, Dachunterspannbahnen, Bekleidung, bspw. Funktionstextil im Bekleidungsbereich, oder Schuhen.

## Claims

1. A multilayer textile fabric comprising a carrier layer, a first cover layer arranged on one side of the carrier layer and, optionally, a second cover layer arranged on the other side of the carrier layer, wherein the carrier layer at least substantially comprises cloth, the first cover layer and, where present, the second cover layer at least substantially comprise a textile composite and the first cover layer and, where present, the second cover layer are connected to the carrier layer by water needling, **characterised in that** the textile composite of the first cover layer as well as, where present, of the second cover layer comprise individual fibres with a fineness of at least 0.6 dtex; **in that** the carrier layer comprises at least one knitted fabric, with the ratio of the open knitted area to the total area of the knitted fabric amounting to between 5 and 90%; **in that** the carrier layer has an elongation between 15 and 80%; and **in that** the textile fabric has a density of less than 0.2g/cm³.

2. A textile fabric in accordance with claim 1, **characterised in that** the textile composite comprises individual fibres with a fineness between 1 and 2 dtex and particularly preferably between 1.4 and 1.7 dtex.

3. A textile fabric in accordance with claim 1 or claim 2, **characterised in that** the carrier layer has an elongation between 30 and 70%.

4. A textile fabric in accordance with any one of the preceding claims, **characterised in that** it has a density between 0.1 and less than 0.2 g/cm³.

5. A textile fabric in accordance with any one of the preceding claims, **characterised in that** the carrier layer is a knitted good.

6. A textile fabric in accordance with any one of the preceding claims, **characterised in that** the carrier layer includes at least one composition selected from the group comprising viscose, cotton, wool, polyester, polyethylene, polypropylene, polyamide, polyacrylics, glass fibres, carbon fibres, aramide fibres and any desired combinations thereof.

7. A textile fabric in accordance with any one of the preceding claims, **characterised in that** the carrier layer has a basis weight of 30 to 350 g/m², preferably 40 to 120 g/m² and particularly preferably 50 to 90 g/m².

8. A textile fabric in accordance with any one of the preceding claims, **characterised in that** the carrier layer comprises at least one knitted fabric, with the ratio of the open knitted area to the total area of the knitted fabric amounting to between 15 and 80% and preferably between 25 and 75%.

9. A textile fabric in accordance with any one of the preceding claims, **characterised in that** the first cover layer and, where present, the second cover layer comprises a non-stitch bonded nonwoven fabric or a mechanically stitch bonded nonwoven fabric.

10. A textile fabric in accordance with claim 9, **characterised in that** the nonwoven fabric includes at least one composition selected from the group comprising viscose, cotton, wool, polyester, polyethylene, polypropylene, polyamide, polyacrylics, glass fibres, carbon fibres, aramide fibres and any desired combinations thereof.

11. A textile fabric in accordance with claim 9 or claim 10, **characterised in that** the nonwoven fabric has a basis weight of 5 to 200 g/m², preferably 20 to 150 g/m² and particularly preferably 30 to 100 g/m².

12. A textile fabric in accordance with any one of the claims 9 to 11, **characterised in that** the length of the fibres forming the nonwoven fabric amounts to 8 to 40 mm, preferably 10 to 30 mm and particularly preferably 12 to 25 mm.

13. A textile fabric in accordance with any one of the preceding claims, **characterised in that** the carrier layer and the first cover layer and, where present, the second cover layer each comprise 20 to 100% by weight, preferably 50 to 100% by weight, particularly preferably 75 to 100% by weight and very particularly preferably 90 to 100% by weight polyester.

14. A textile fabric in accordance with any one of the claims 1 to 12, **characterised in that** the carrier layer comprises 20 to 100% by weight, preferably 50 to 100% by weight, particularly preferably 75 to 100% by weight and very particularly preferably 90 to 100% by weight polyester and the first cover layer and, where present, the second cover layer comprise 20 to 100% by weight, preferably 50 to 100% by weight, particularly preferably 75 to 100% by weight and very particularly preferably 90 to 100% by weight cellulose viscose.

15. A textile fabric in accordance with any one of the claims 1 to 12, **characterised in that** the carrier layer comprises 20 to 100% by weight, preferably 50 to 100% by weight, particularly preferably 75 to 100% by weight and very particularly preferably 90 to 100% by weight polyester and the first cover layer and, where present, the second cover layer comprise 20 to 100% by weight, preferably 50 to 100% by weight, particularly preferably 75 to 100% by weight and very particularly preferably 90 to 100% by weight polypropylene.

16. A textile fabric in accordance with any one of the preceding claims, **characterised in that** the carrier layer is water needled to the first cover layer and, where present, to the second cover layer with a water pressure between 20 and 500 bar, preferably between 50 and 400 bar, and particularly preferably between 100 and 300 bar.

17. A textile fabric in accordance with any one of the preceding claims, **characterised in that** the carrier layer is water needled to the first cover layer and, where present, to the second cover layer with water jets 0.1 to 0.5 mm thick.

18. A textile fabric in accordance with any one of the preceding claims, **characterised in that** the carrier layer is water needled to the first cover layer and, where present, to the second cover layer at both sides.

19. A textile fabric in accordance with any one of the preceding claims, **characterised in that** it was mechanically needled after the water needling.

20. A method for the manufacture of a textile fabric in accordance with any one of the claims 1 to 19, wherein fibrous web is deposited on at least one side of a cover layer comprising at least substantially cloth and the fibrous web is connected to the carrier layer by water needling.

21. A method for the manufacture of a textile fabric in accordance with any one of the claims 1 to 19, wherein a mechanically pre-stitch bonded nonwoven fabric is deposited on at least one side of a cover layer comprising at least substantially cloth and the pre-stitch bonded nonwoven fabric is connected to the carrier layer by water needling.

22. A method in accordance with claim 20 or claim 21, **characterised in that** the water needling takes place at a water pressure between 20 and 500 bar, preferably between 50 and 400 bar and particularly preferably between 100 and 300 bar.

23. A method in accordance with any one of the claims 20 to 22, **characterised in that** the water needling takes place with water jets 0.1 to 0.5 mm thick.

24. A method in accordance with any one of the claims 20 to 23, **characterised in that** the water jets are guided from the cover layer in the direction of the carrier layer in the water needling.

25. Use of a textile fabric in accordance with any one of the claims 1 to 19 as a component of filters, planting mats, roof sarking, clothing, for example functional textiles in the clothing area, or shoes.

## Revendications

1. Structure textile plane multicouches comprenant une couche porteuse, une première couche de recouvrement agencée sur un côté de la couche porteuse et en option une seconde couche de recouvrement agencée sur l'autre côté de la couche porteuse, ladite couche porteuse étant au moins essentiellement en tissu, la première couche de recouvrement ainsi que, si elle est présente, la seconde couche de recouvrement étant constituées au moins sensiblement d'un matériau composite textile, et la première couche de recouvrement ainsi que, si elle est présente, la seconde couche de recouvrement sont reliées à la couche porteuse par aiguilletage à l'eau,
**caractérisée en ce que** le matériau composite textile de la première couche de recouvrement ainsi que, si elle est présente, de la seconde couche de recouvrement est constitué de fibres individuelles avec une finesse d'au moins 0,6 dtex, **en ce que** la couche porteuse est constituée par au moins à un produit maillé, le rapport de la surface ouverte des mailles sur la surface totale du produit maillé étend entre 5 et 90 %, **en ce que** la couche porteuse présente un allongement entre 15 et 80 %, et **en ce que** la structure textile plane présente une densité de moins de 0,2 g/cm³.

2. Structure textile plane selon la revendication 1, **caractérisée en ce que** le matériau composite textile est constitué de fibres individuelles avec une finesse entre 1 et 2 dtex et de façon particulièrement préférée entre 1,4 et 1,7 dtex.

3. Structure textile plane selon la revendication 1 ou 2, **caractérisée en ce que** la couche porteuse présente un allongement entre 30 et 70 %.

4. Structure textile plane selon l'une des revendications précédentes, **caractérisée en ce que** celle-ci présente une densité entre 0,1 et moins de 0,2 g/cm³.

5. Structure textile plane selon l'une des revendications précédentes, **caractérisée en ce que** la couche porteuse est un tricot.

6. Structure textile plane selon l'une des revendications précédentes, **caractérisée en ce que** la couche porteuse comprend au moins un composé choisi parmi le groupe comprenant viscose, coton, laine, polyester, polyéthylène, polypropylène, polyamide, polyacryle, fibres de verre, fibres de carbone, fibres aramide et leurs combinaisons quelconques.

7. Structure textile plane selon l'une des revendications précédentes, **caractérisée en ce que** la couche porteuse présente un poids surfacique de 30 à 350 g/m², de préférence 40 à 120 g/m², et de façon particulièrement préférée 50 à 90 g/m².

8. Structure textile plane selon l'une des revendications précédentes, **caractérisée en ce que** la couche porteuse est constituée par au moins un produit maillé, dans lequel le rapport de la surface ouverte des mailles sur la surface totale du produit maillé est compris entre 15 et 80 % et de façon préférée entre 25 et 75 %.

9. Structure textile plane selon l'une des revendications précédentes, **caractérisée en ce que** la première couche de recouvrement et, si elle présente, la seconde couche de recouvrement est constituée en une nappe non-tissée non renforcée ou mécaniquement renforcée.

10. Structure textile plane selon la revendication 9, **caractérisée en ce que** la nappe non-tissée contient au moins un composé choisi parmi le groupe comprenant viscose, coton, laine, polyester, polyéthylène, polypropylène, polyamide, polyacryle, fibres de verre, fibres de carbone, fibres aramides et leurs combinaisons quelconques.

11. Structure textile plane selon la revendication 9 ou 10, **caractérisée en ce que** la nappe non-tissée présente un poids surfacique de 5 à 200 g/m², de préférence 20 à 150 g/m², et de façon particulièrement préférée 30 à 100 g/m².

12. Structure textile plane selon l'une des revendications 9 à 11, **caractérisée en ce que** la longueur des fibres formant la nappe non-tissée s'élève de 8 à 40 mm, de préférence de 10 à 30 mm, et de façon particulièrement préférée de 12 à 25 mm.

13. Structure textile plane selon l'une des revendications précédentes, **caractérisée en ce que** la couche porteuse et la première couche de recouvrement ainsi que, si elle est présente, la seconde couche de recouvrement sont constituées de polyester chacune à raison de 2 à 100 % en poids, de façon préférée de 50 à 100 % en poids, de façon particulièrement préférée de 75 à 100 % en poids, et de façon tout à fait préférée de 90 à 100 % en poids.

14. Structure textile plane selon l'une des revendications 1 à 12, **caractérisée en ce que** la couche porteuse est constituée de polyester à raison de 20 à 100 % en poids, de façon préférée de 50 à 100 % en poids, de façon particulièrement préférée de 75 à 100 % en poids, et de façon tout à fait préférée de 90 à 100 % en poids, et la première couche de recouvrement ainsi que, si elle est présente, la seconde couche de recouvrement sont constituées de viscose de cellulose à raison de 20 à 100 % en poids, de préférence de 50 à 100 % en poids, de façon particulièrement préférée de 75 à 100 % en poids, et de façon tout à fait préférée de 90 à 100 % en poids.

15. Structure textile plane selon l'une des revendications 1 à 12, **caractériser en ce que** la couche porteuse est constituée de polyester à raison de 20 à 100 % en poids, de façon préférée de 50 à 100 % en poids, de façon particulièrement préférée de 75 à 100 % en poids, et de façon tout à fait préférée de 90 à 100 % en poids, et la première couche de recouvrement ainsi que, si elle est présente, la seconde couche de recouvrement sont constituées de polypropylène à raison de 20 à 100 % en poids, de préférence de 50 à 100 % en poids, de façon particulièrement préférée de 75 à 100 % en poids, et de façon tout à fait préférée de 90 à 100 % en poids.

16. Structure textile plane selon l'une des revendications précédentes, **caractérisée en ce que** la couche porteuse est aiguilletée à l'eau avec la première couche de recouvrement et, si elle est présente, la seconde couche de recouvrement, avec une pression d'eau entre 20 et 500 bars, de préférence entre 50 et 400 bars, et de façon particulièrement préférée entre 100 et 300 bars.

17. Structure textile plane selon l'une des revendications précédentes, **caractérisée en ce que** la couche porteuse est aiguilletée à l'eau avec la première couche de recouvrement et, si elle est présente, la seconde couche de recouvrement avec des jets d'eau d'une épaisseur de 0,1 à 0,5 mm.

18. Structure textile plane selon l'une des revendications précédentes, **caractérisée en ce que** la couche porteuse est aiguilletée à l'eau des deux côtés avec la première couche de recouvrement et, si elle est présente, la seconde couche de recouvrement.

19. Structure textile plane selon l'une des revendications précédentes, **caractérisée en ce que** celle-ci a été aiguilletée mécaniquement après l'aiguilletage à l'eau.

20. Procédé pour réaliser une structure textile plane selon l'une des revendications 1 à 19, dans lequel un voile de fibres est déposé sur au moins un côté d'une couche porteuse constituée au moins sensiblement en tissu, et le voile de fibres est relié par aiguilletage à l'eau avec la couche porteuse.

21. Procédé pour réaliser une structure textile plane selon l'une des revendications 1 à 19, dans lequel une nappe mécaniquement préalablement renforcée est déposée sur au moins un côté d'une couche porteuse constituée au moins sensiblement en tissu, et la nappe préalablement renforcée est reliée à la couche porteuse par aiguilletage à l'eau.

22. Procédé selon la revendication 20 ou 21, **caractérisé en ce que** l'aiguilletage à l'eau a lieu avec une pression d'eau entre 20 et 500 bars, de préférence entre 50 et 400 bars, et de façon particulièrement préférée entre 100 et 300 bars.

23. Procédé selon l'une des revendications 20 à 22, **caractérisé en ce que** l'aiguilletage à l'eau a lieu avec des jets d'eau d'une épaisseur de 0,1 à 0,5 mm.

24. Procédé selon l'une des revendications 20 à 23, **caractérisé en ce que** lors de l'aiguilletage à l'eau, les jets d'eau sont guidés depuis la couche de recouvrement en direction de la couche porteuse.

25. Utilisation d'une structure textile plane selon l'une des revendications 1 à 19 comme composant pour des filtres, des nappes de couverture au sol, des nappes de doublure sous toiture, des vêtements, ou des textiles fonctionnels dans le domaine de l'habillage, ou des chaussures.
